# EUROPÄISCHE PATENTSCHRIFT

(11) **EP 0 718 150 B1**
(45) Veröffentlichungstag und Bekanntmachung des Hinweises auf die Patenterteilung: **23.02.2000**
(21) Anmeldenummer: 95118418.3
(22) Anmeldetag: 23.11.1995
(51) Int. Cl.: B60Q 1/00

(54) **Im Frontteil eines Fahrzeugs angeordnete Beleuchtungseinheit**
Lighting unit mounted in vehicle front part
Unité d'éclairage montée sur la face avant d'un véhicule

(30) Priorität: 20.12.1994 DE 4445272
(43) Veröffentlichungstag der Anmeldung: 26.06.1996
(73) Patentinhaber: ROBERT BOSCH GMBH, 70442 Stuttgart (DE)
(72) Erfinder: Dobler, Karl-Otto, D-72768 Reutlingen (DE)

(56) Entgegenhaltungen:
- DE-A- 3 030 427
- DE-A- 4 235 289
- FR-A- 2 502 294
- FR-A- 2 664 980

## Beschreibung

### Stand der Technik

Die Erfindung geht aus von einer an einem Frontteil eines Fahrzeugs angeordneten Beleuchtungseinrichtung nach der Gattung des Anspruchs 1.

Eine solche Beleuchtungseinrichtung ist durch die DE 30 30 427 A1 bekannt. Diese Beleuchtungseinrichtung ist als Scheinwerfer ausgebildet und weist ein Gehäuseteil auf, in dem wenigstens ein Reflektor und wenigstens eine Lichtquelle angeordnet sind und das an seinem Vorderende eine Lichtaustrittsöffnung aufweist, die mit einer lichtdurchlässigen Abdeckscheibe verschlossen ist. Das Gehäuseteil ist am Frontteil des Fahrzeugs befestigt, beispielsweise mittels einer Rastverbindung, und weist an seiner Rückseite eine Öffnung auf, die mit einem separaten Verschlußteil verschließbar ist, das dann eine Rückwand bildet. Durch das Gehäuseteil, die Abdeckscheibe und das Verschlußteil ist ein abgeschlossener Raum begrenzt, in dem der wenigstens eine Reflektor und die wenigstens eine Lichtquelle der Beleuchtungseinrichtung angeordnet sind und damit gegen Schmutz und Feuchtigkeit geschützt sind. Das Gehäuseteil mit dem Verschlußteil erfordert einen großen Stoffeinsatz zu dessen Herstellung und einen großen Einbauraum am Frontteil, was vermieden werden sollte.

### Vorteile der Erfindung

Die erfindungsgemäße an einem Frontteil eines Fahrzeugs angeordnete Beleuchtungseinrichtung mit den Merkmalen des Anspruchs 1 hat demgegenüber den Vorteil, daß für das Gehäuseteil ein geringer Stoffeinsatz erforderlich ist, da dieses keine eigene Rückwand aufzuweisen braucht, sondern ein Abschnitt des Frontteils als Rückwand dient. Außerdem erfordert die Beleuchtungseinrichtung dadurch vor allem in Längsrichtung nur einen kleinen Einbauraum am Frontteil.

In den abhängigen Ansprüchen sind vorteilhafte Ausgestaltungen und Weiterbildungen der erfindungsgemäßen Beleuchtungseinrichtung angegeben. Bei der Ausbildung gemäß Anspruch 2 kann der Stoffeinsatz für das Gehäuseteil weiter verringert werden. Durch die Ausbildung gemäß Anspruch 4 ist auf einfache Weise ein Austausch der wenigstens einen Lichtquelle ermöglicht.

### Zeichnung

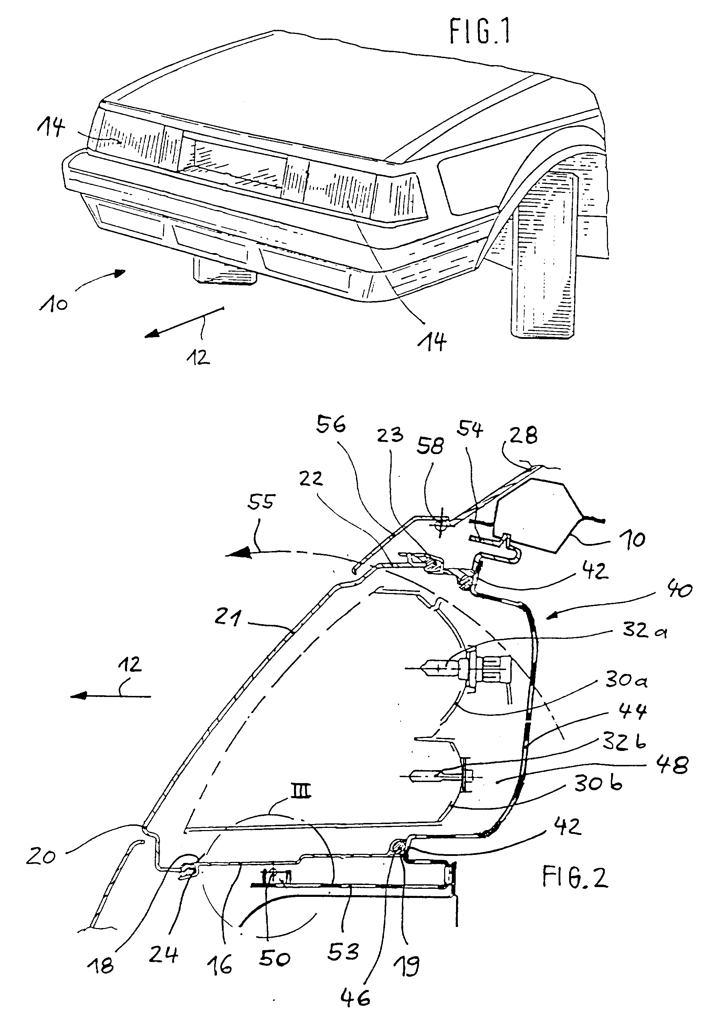

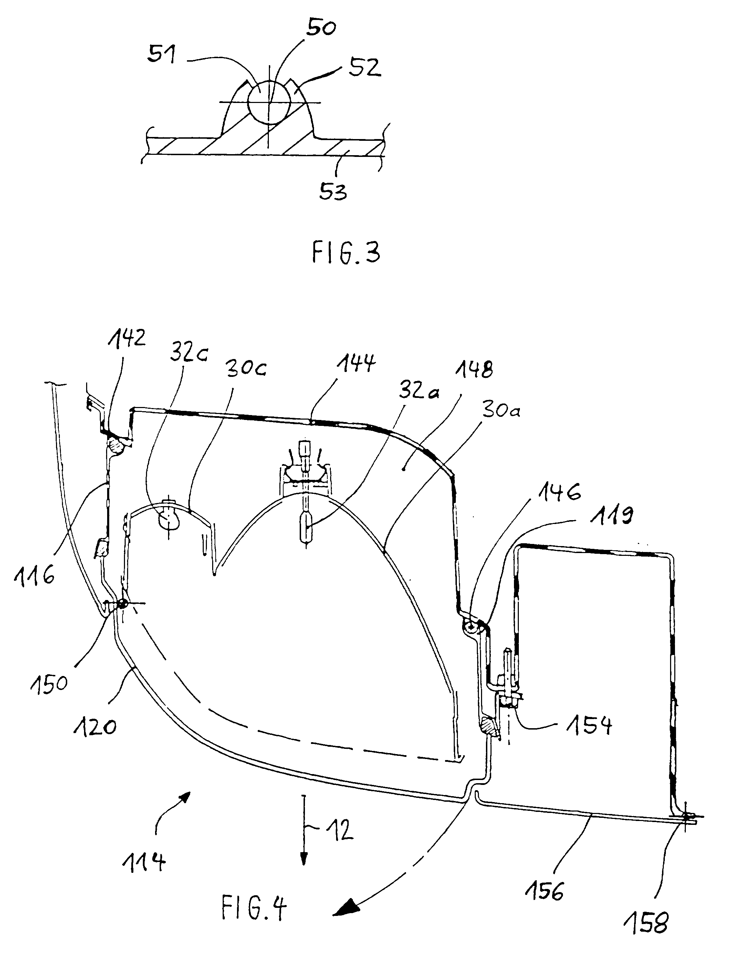

Zwei Ausführungsbeispiele der Erfindung sind in der Zeichnung dargestellt und in der nachfolgenden Beschreibung näher erläutert. Es zeigen Figur 1 ein Frontteil eines Fahrzeugs mit einer darin angeordneten Beleuchtungseinrichtung, Figur 2 die Beleuchtungseinrichtung in einem vertikalen Längsschnitt gemäß einem ersten Ausführungsbeispiel, Figur 3 einen in Figur 2 mit III bezeichneten Ausschnitt der Beleuchtungseinrichtung in vergrößerter Darstellung und Figur 4 die Beleuchtungseinrichtung in einem horizontalen Längsschnitt gemäß einem zweiten Ausführungsbeispiel.

### Beschreibung der Ausführungsbeispiele

An einem in Figur 1 dargestellten Frontteil 10 eines Fahrzeugs, insbesondere eines Kraftfahrzeugs, ist an dessen in Fahrtrichtung 12 weisendem Vorderende zumindest eine Beleuchtungseinrichtung 14 angeordnet, die als Scheinwerfer oder als Scheinwerfer-Leuchten-Einheit ausgebildet ist. Am Frontteil 10 können noch weitere Aggregate des Fahrzeugs angeordnet sein. Vorzugsweise ist am Frontteil 10 wie bei Kraftfahrzeugen üblich an jeder Seite ein Scheinwerfer bzw. eine Scheinwerfer-Leuchten-Einheit 14 angeordnet. Das Frontteil 10 kann aus Kunststoff oder aus Blech bestehen.

In Figur 2 ist die als Scheinwerfer ausgebildete Beleuchtungseinrichtung 14 gemäß einem ersten Ausführungsbeispiel dargestellt. Der Scheinwerfer 14 weist dabei ein rahmenartiges Gehäuseteil 16 auf, das an seinem in Fahrtrichtung 12 weisenden Vorderende eine Lichtaustrittsöffnung 18 aufweist, die mit einer lichtdurchlässigen Abdeckscheibe 20 aus Glas oder Kunststoff verschlossen ist. Das Gehäuseteil 16 besteht vorzugsweise aus Kunststoff, kann jedoch auch aus anderem geeignetem Material bestehen, beispielsweise Blech oder Metallguß. Die Abdeckscheibe 20 kann glatt ausgebildet sein oder optisch wirksame Elemente aufweisen, durch die hindurchtretendes Licht abgelenkt wird. Die Abdeckscheibe 20 weist einen Hauptbereich 21 auf, durch den das aus dem Scheinwerfer austretende Licht hindurchtritt, und einen zum Gehäuseteil 16 weisenden umlaufenden Rand 22, der über ein Dichtelement 23, das in einer umlaufenden Ringnut 24 am Vorderrand des Gehäuseteils 16 eingelegt ist, am Gehäuseteil 16 anliegt. Die Befestigung der Abdeckscheibe 20 am Gehäuseteil 16 kann durch Verkleben, mittels einer oder mehrerer Haltklammern oder durch eine Rastverbindung erfolgen. Die Abdeckscheibe 20 ist in ihrer Neigung und/oder Krümmung an den diese umgebenden Bereich des Frontteils 10 oder der Karosserie 28 des Kraftfahrzeugs angepaßt, so daß diese das Frontteil 10 bzw. die Karosserie 28 kontinuierlich, daß heißt ohne Stufen fortsetzt.

Am Gehäuseteil 16 ist wenigstens ein Reflektor 30 gelagert, in den wenigstens eine Lichtquelle 32 eingesetzt ist. Die Lichtquelle 32 ist im Scheitelbereich des Reflektors 30 von dessen Rückseite her in diesen eingesetzt. Der Reflektor 30 kann auch mehrere Teilbereiche aufweisen, wobei beispielsweise wie in Figur 2 dargestellt ein oberer Teilbereich 30a für die Erzeugung eines Abblendlichtbündels vorgesehen sein kann und ein unterer Teilbereich 30b für die Erzeugung eines Fernlicht- oder Nebellichtbündels vorgesehen sein kann. Alternativ oder zusätzlich kann der Reflektor 30 auch wie in Figur 4 dargestellt einen seitlicher Teilbereich 30c für die Erzeugung eines Nebellicht- oder Fernlichtbündels aufweisen. Der seitliche Teilbereich 30c kann auch für eine Leuchte, insbesondere eine Blinkleuchte vorgesehen sein. Jedem Teilbereich 30a,b,c des Reflektors 30 ist dabei eine gesonderte Lichtquelle 32a,b,c zugeordnet. Alternativ können auch mehrere einzelne Reflektoren starr miteinander verbunden sein, die dann wie vorstehend beschrieben zur Erzeugung eines Abblendlichtbündels, eines Fernlichtbündels oder eines Nebellichtbündels dienen oder für eine Leuchte vorgesehen sind und die jeweils eine gesonderte Lichtquelle aufweisen. Das Gehäuseteil 16 ist an seiner Rückseite offen ausgebildet und weist an seiner Rückseite einen umlaufenden Rand 19 auf. Das Gehäuseteil 16 erstreckt sich in Längsrichtung ausgehend von seinem Vorderrand, an dem die Abdeckscheibe 20 befestigt ist, entgegen Fahrtrichtung 12. Der umlaufende Rand 19 verläuft in einer Ebene, die senkrecht zur Fahrtrichtung 12 liegen kann oder zu dieser in vertikaler Richtung und/oder in horizontaler Richtung geneigt angeordnet sein kann.

Die Lagerung des Reflektors 30 am Gehäuseteil 16 ist in bekannter Weise ausgeführt und daher nicht näher dargestellt. Im übrigen kann der Reflektor 30 ebenfalls in bekannter Weise relativ zum Gehäuseteil 16 zu dessen Einstellung bewegbar sein, insbesondere um eine etwa horizontal und/oder etwa vertikal verlaufende Achse schwenkbar sein. Für eine Einstellung des Reflektors 30 sind bekannte Verstellvorrichtungen vorgesehen, die von außerhalb des Gehäuseteils 16 betätigbar sind.

Das Frontteil 10 weist einen Abschnitt 40 auf, mit einem in Fahrtrichtung 12 weisenden umlaufenden, im wesentlichen ebenen Rand 42 und einer vom Rand 42 umgebenen, entgegen Fahrtrichtung gerichteten Vertiefung oder Ausbuchtung auf, die durch eine Wandung 44 begrenzt ist. Bei am Frontteil 10 montiertem Scheinwerfer 14 kommt der entgegen Fahrtrichtung 12 weisende umlaufende Rand 19 des Gehäuseteils 16 am Rand 42 des Frontteilabschnitts 40 zur Anlage und der Scheitel des Reflektors 30 sowie die Lichtquelle 32 ragen in die Ausbuchtung hinein. Zwischen dem Gehäuseteil 16 und dem Rand 42 ist ein elastisches Dichtelement 46 angeordnet. Durch das Gehäuseteil 16, die Abdeckscheibe 20 und die Wandung 44 wird ein geschlossener Raum 48 begrenzt, in dem der Reflektor 30 mit der Lichtquelle 32 gegen Schmutz und Feuchtigkeit geschützt angeordnet ist.

Das Gehäuseteil 16 ist an seinem unteren Randbereich um eine etwa horizontal verlaufende Achse 50 schwenkbar am Frontteil 10 gelagert, wobei ein Teil der Elemente zur Bildung der Schwenkachse 50 am Gehäuseteil 16 und ein anderer Teil der Elemente zur Bildung der Schwenkachse 50 am Frontteil angeordnet ist. Beispielsweise sind, wie in Figur 3 dargestellt, am Gehäuseteil 16 mit Abstand zueinander zwei Lagerzapfen 51 ausgebildet, von denen in Figur 3 jedoch nur einer erkennbar ist, die in am Frontteil 10 angeordnete Lagerböcke 52 eingreifen. Die Lagerböcke 52 sind an einer unterhalb des Rands 42 des Frontteilabschnitts 40 ausgebildeten, in Fahrtrichtung 12 verlaufenden Wand 53 angeordnet und können einstückig mit dieser ausgebildet sein. Die Anordnung der Lagerzapfen 51 und Lagerböcke 52 kann selbstverständlich auch umgekehrt sein, so daß die Lagerzapfen am Frontteil 10 und die Lagerböcke am Gehäuseteil 16 angeordnet sind. Die Schwenkachse 50 ist in Längsrichtung, das heißt in Fahrtrichtung 12 betrachtet, zwischen dem Vorderrand des Gehäuseteils 16 und der am Rand 42 des Frontteilabschnitts 40 anliegenden Rückseite des Gehäuseteils 16 angeordnet. Der Schwenkachse 50 gegenüberliegend an seinem oberen Randbereich ist das Gehäuseteil 16 am Frontteil 10 mittels eines lösbaren Befestigungselements 54 befestigbar. Als Befestigungselement 54 können bekannte Elemente wie Schrauben oder ähnliches verwendet werden. Bei der Ausführung gemäß Figur 2 ist das Befestigungselement 54 als ein Rasthaken ausgebildet, der am Frontteil 10 radial zur Schwenkachse 50 einrastbar ist und der einen Betätigungsabschnitt aufweist, mit dem der Rasthaken 54 aus seiner Rastung gelöst werden kann. Bei angebrachtem Befestigungselement 54 ist das Gehäuseteil 16 am Frontteil 10 festgelegt und wird gegen den Rand 42 des Frontteilabschnitts 40 gedrückt. Nach Lösen des Befestigungselements 54 ist das Gehäuseteil 16 mit seinem oberen Randbereich in Fahrtrichtung 12 vom Frontteilabschnitt 40 in Richtung des Pfeils 55 wegschwenkbar, wobei dann durch die offene Rückseite des Gehäuseteils 16 die Lichtquelle 32 zu einem Austausch zugänglich ist.

Am Frontteil 10 oder an der Karosserie 28 ist ein Verschlußteil 56 in Form einer Serviceklappe angeordnet, durch das das Befestigungselement 54 sowie ein eventuell zwischen dem Scheinwerfer 14 und dem Frontteil 10 vorhandener Spalt zumindest teilweise verdeckbar ist. Die Serviceklappe 56 ist oberhalb des Scheinwerfers 14 angeordnet und beispielweise an ihrem oberen Randbereich um eine etwa horizontal verlaufende Achse 58 an der Karosserie 28 schwenkbar gelagert. In ihrer in Figur 2 dargestellten Stellung ragt die Serviceklappe 56 über den Rand 22 der Abdeckscheibe 20 bis etwa zu deren Hauptbereich 21 hin, so daß das Befestigungselement 54 nicht sichtbar und auch nicht zugänglich ist. Die Serviceklappe 56 ist um die Achse 58 mit ihrem unteren Randbereich in Fahrtrichtung 12 vom Scheinwerfer 14 wegschwenkbar in eine Stellung, in der das Befestigungselement 54 zugänglich ist und angebracht oder gelöst werden kann.

In Figur 4 ist die Beleuchtungseinrichtung 114 gemäß einem zweiten Ausführungsbeispiel dargestellt, bei dem diese ebenfalls als Scheinwerfer ausgebildet ist. Der Scheinwerfer 114 weist das Gehäuseteil 116 und die an diesem befestigte Abdeckscheibe 120 auf. Am Gehäuseteil 116 ist der wenigstens eine Reflektor 30 gelagert, in den die wenigstens eine Lichtquelle 32 von dessen Rückseite her eingesetzt ist. Das Gehäuseteil 116 liegt mit dem umlaufenden Rand 119 seiner offenen Rückseite über das Dichtelement 146 am umlaufenden Rand 142 des Frontteilsabschnitts 140 an, so daß der den Reflektor 30 und die Lichtquelle 32 aufnehmende, durch die Abdeckscheibe 120, das Gehäuseteil 116 sowie den Frontteilabschnitt 140 mit der Wand 144 der Ausbuchtung begrenzte abgeschlossene Raum 148 gebildet ist. Abweichend vom ersten Ausführungsbeispiel ist das Gehäuseteil 116 um eine an dessen seitlichem Randbereich angeordnete, etwa vertikal verlaufende Achse 150 am Frontteil 110 schwenkbar gelagert. Wie beim ersten Ausführungsbeispiel ist dabei ein Teil der Elemente zur Bildung der Schwenkachse 150 am Gehäuseteil 116 angeordnet und ein anderer Teil dieser Elemente ist am Frontteil 110 angeordnet. Die Schwenkachse 150 ist nahe dem äußeren Randbereich des Frontteils 110 angeordnet und dieser gegenüberliegend ist das Gehäuseteil 116 an dessen innerem seitlichem Randbereich mittels des wenigstens einen Befestigungselements 154 am Frontteil 110 lösbar befestigbar. An den inneren seitlichen Randbereich des Gehäuseteils 116 anschließend ist das Verschlußteil 156 in Form der Serviceklappe angeordnet, die in ihrer in Figur 4 dargestellten Stellung bis an den Hauptbereich 121 der Abdeckscheibe 120 reicht und durch die dabei das Befestigungselement 154 verdeckt wird. Die Serviceklappe 156 ist in der Weise entfernbar, daß das Befestigungselement 154 zu dessen Anbringung oder Lösung zugänglich ist. Die Serviceklappe 156 kann hierzu völlig entfernt werden oder beispielsweise an ihrem dem Befestigungselement 154 gegenüberliegenden seitlichen Randbereich um eine etwa vertikal verlaufende Achse 158 schwenkbar gelagert sein. Die Serviceklappe 156 kann ein Teil des Frontteils 110 oder der Karosserie 128 sein.

## Patentansprüche

1. In einem Frontteil eines Fahrzeugs angeordnete Beleuchtungseinrichtung, wobei die Beleuchtungseinrichtung (14;114) wenigstens einen Reflektor (30) und eine Lichtquelle (32) aufweist, die zumindest teilweise von einem Gehäuseteil (16;116) umgeben sind, das an seiner Vorderseite eine Lichtaustrittsöffnung (18) aufweist, die mit einer lichtdurchlässigen Abdeckscheibe (20;120) verschlossen ist, und wobei das Gehäuseteil (16;116) am Frontteil (10;110) befestigbar ist, dadurch gekennzeichnet, daß das Gehäuseteil (16;116) rahmenartig ausgebildet ist und an seiner der Abdeckscheibe (20;120) gegenüberliegenden Rückseite offen ausgebildet ist, daß das Gehäuseteil (16;116) in seiner am Frontteil (10;110) befestigten Stellung mit einem umlaufenden Rand (19;119) seiner offenen Rückseite an einem Abschnitt (40,42;140,142) des Frontteils (10;110) zur Anlage kommt und daß der Frontteilabschnitt (40;140) eine innerhalb des umlaufenden Rands (19;119) des Gehäuseteils (16;116) angeordnete Wandung (44;144) aufweist, so daß ein vom Gehäuseteil (16;116), der Abdeckscheibe (20;120) und der Wandung (44;144) begrenzter, geschlossener Raum (48;148) gebildet ist, innerhalb dem der wenigstens eine Reflektor (30) und die wenigstens eine Lichtquelle (32) angeordnet sind.

2. Beleuchtungseinrichtung nach Anspruch 1, dadurch gekennzeichnet, daß der Frontteilabschnitt (40;140) einen umlaufenden Rand (42;142) aufweist, an dem der umlaufende Rand (19;119) der offenen Rückseite des Gehäuseteils (16;116) zur Anlage kommt, und daß die Wandung (44;144) eine vom Scheitel des wenigstens einen Reflektors (30) wegweisende Ausbuchtung aufweist, in die der Reflektorscheitel und die in diesen eingesetzte wenigstens eine Lichtquelle (32) bei am Frontteil (10;110) befestigtem Gehäuseteil (16;116) hineinragen.

3. Beleuchtungseinrichtung nach Anspruch 1 oder 2, dadurch gekennzeichnet, daß zwischen dem umlaufenden Rand (19;119) der offenen Rückseite des Gehäuseteils (16;116) und dem Frontteilabschnitt (40,42;140,142) ein elastisches Dichtelement (46;146) angeordnet ist.

4. Beleuchtungseinrichtung nach einem der Ansprüche 1 bis 3, dadurch gekennzeichnet, daß das Gehäuseteil (16;116) an einem Randbereich am Frontteil (10;110) schwenkbar gelagert ist, mittels wenigstens eines exzentrisch zur Schwenkachse (50;150) angeordneten, lösbaren Befestigungselements (54;154) in seiner mit seinem umlaufenden Rand (19;119) am Frontteilabschnitt (40,42;140,142) anliegenden Stellung befestigbar ist und bei gelöstem Befestigungselement (54;154) um die Schwenkachse (50;150) derart vom Frontteilabschnitt (40,42;140,142) wegschwenkbar ist, daß die wenigstens eine Lichtquelle (32) zugänglich ist.

5. Beleuchtungseinrichtung nach Anspruch 4, dadurch gekennzeichnet, daß das Gehäuseteil (116) an einem seitlichen Randbereich um die etwa vertikal verlaufende Achse (150) schwenkbar gelagert ist.

6. Beleuchtungseinrichtung nach Anspruch 4, dadurch gekennzeichnet, daß am Frontteil (10;110) ein lösbares Verschlußteil (56;156) angeordnet ist, durch das das wenigstens eine Befestigungselement (54;154) verdeckbar ist, und das wenigstens teilweise entfernbar ist, so daß das wenigstens eine Befestigungselement (54;154) zugänglich ist.

## Claims

1. Lighting device arranged in a front part of a vehicle, the lighting device (14;114) having at least one reflector (30) and a light source (32) which are at least partially surrounded by a housing part (16;116) which has, on its front side, a light-outlet opening (18) which is closed by a transparent cover disc (20;120), and the housing part (16;116) being able to be fastened to the front part (10;110), characterized in that the housing part (16;116) is designed in the manner of a frame and is designed such that it is open at its rear side which is opposite the cover disc (20;120), in that the housing part (16;116), in its position fastened to the front part (10;110), coming to rest, with a peripheral edge (19;119) of its open rear side, on a section (40,42;140,142) of the front part (10;110), and in that the front part section (40;140) has a wall (44;144) which is arranged within the peripheral edge (19;119) of the housing part (16;116) which results in the formation of a closed space (48;148) which is bounded by the housing part (16;116), the cover disc (20;120) and the wall (44;144) and within which the at least one reflector (30) and the at least one light source (32) are arranged.

2. Lighting device according to Claim 1, characterized in that the front part section (40;140) has a peripheral edge (42;142) on which the peripheral edge (19;119) of the open rear side of the housing part (16;116) comes to rest, and in that the wall (44;144) has a bulge which points away from the apex of the at least one reflector (30) and into which the reflector apex and the at least one light source (32), which is inserted into said reflector apex, protrude when the housing part (16;116) is fastened to the front part (10;110).

3. Lighting device according to Claim 1 or 2, characterized in that an elastic sealing element (46;146) is arranged between the peripheral edge (19;119) of the open rear side of the housing part (16;116) and the front part section (40,42;140,142).

4. Lighting device according to one of Claims 1 to 3, characterized in that the housing part (16;116) is mounted pivotably on an edge region on the front part (10;110), can be fastened, by means of at least one releasable fastening element (54;154) arranged eccentrically to the pivot axis (50;150), in its position resting with its peripheral edge (19;119) on the front part section (40,42;140,142) and when the fastening element (54;154) is released can be pivoted away from the front part section (40,42;140,142) about the pivot axis (50;150) in such a manner that the at least one light source (32) is accessible.

5. Lighting device according to Claim 4, characterized in that the housing part (116) is mounted on a lateral edge region in a manner such that it can be pivoted about the approximately vertically extending axis (150).

6. Lighting device according to Claim 4, characterized in that on the front part (10;110) there is arranged a releasable closure part (56;156) by means of which the at least one fastening element (54;154) can be covered, and which can at least partially be removed so that the at least one fastening element (54;154) is accessible.

## Revendications

1. Dispositif d'éclairage monté sur la face avant d'un véhicule, le dispositif d'éclairage (14 ;114) présentant au moins un réflecteur (30) et une source de lumière (32), qui sont entourés au moins en partie par une pièce de boîtier (16 ; 116) qui présente, sur son côté antérieur, une ouverture de sortie de lumière (18) fermée par une glace de recouvrement (20 ; 120) qui laisse passer la lumière, et la pièce de boîtier (16 ; 116) pouvant être fixée sur la face avant (10 ; 110) du véhicule,
caractérisé en ce que
• la pièce de boîtier (16 ; 116) est constituée à la manière d'un cadre et est réalisée de façon ouverte sur son côté arrière situé en regard de la glace de recouvrement (20 ; 120),
• la pièce de boîtier (16 ; 116) vient en appui, dans sa position fixée sur la face avant (10 ; 110), par un bord (19 ; 119) qui fait tout le tour de son côté arrière ouvert sur une section (40, 42 ; 140 ; 142) de la face avant (10 ; 110), et
• la section (40 ; 140) de la face avant présente une paroi (44 ; 144), qui est disposée à l'intérieur du bord (19 ; 119) faisant tout le tour de la pièce de boîtier (16 ; 116), de telle sorte qu'on forme un espace fermé (48 ; 148), délimité par la pièce de boîtier (16 ; 116), la glace de recouvrement (20 ; 120), et la paroi (44 ; 144), espace à l'intérieur duquel sont disposés l'un au moins des réflecteurs (30) et l'une au moins des sources de lumière (32).

2. Dispositif d'éclairage selon la revendication 1,
caractérisé en ce que
• la section (40 ; 140) de la face avant présente un bord (42 ; 142) qui fait tout le tour, sur lequel vient en appui le bord (19 ; 119) qui fait tout le tour du côté arrière de la pièce de boîtier (16 ; 116), et
• la paroi (44 ; 144) présente un ventre vers l'extérieur, qui s'écarte du sommet d'au moins l'un des réflecteurs (30), ventre dans lequel pénètrent le sommet du réflecteur et l'une au moins des sources de lumière (32) insérée dans celui-ci quand la pièce de boîtier (16 ; 116) est fixée sur la face avant (10 ; 110).

3. Dispositif d'éclairage selon la revendication 1 ou 2,
caractérisé en ce que
on dispose entre un élément d'étanchéité élastique (46 ; 146) le bord (19 ; 119) qui fait tout le tour, du côté arrière ouvert, de la pièce de boîtier (16 ; 116) et la section de la face avant (40 ; 42 ; 140 ; 142).

4. Dispositif d'éclairage selon l'une des revendications 1 à 3,
caractérisé en ce que
la pièce de boîtier (16 ; 116) est montée de façon à pouvoir pivoter sur une zone de bordure sur la face avant (10 ; 110), peut être fixée au moyen d'au moins un élément de fixation (54 ; 154) amovible disposé de façon excentrée par rapport à l'axe de pivotement (50 ; 150), dans sa position reposant par son bord (19 ; 119) qui fait tout le tour, sur la section de face avant (40, 42 ; 140 ; 142), et peut s'écarter de la section (40, 42 ; 140, 142) en pivotant, quand l'élément de fixation (54 ; 154) est relâché, autour de l'axe de pivotement (50 ; 150), d'une manière telle que l'une au moins des sources de lumière (32) est accessible.

5. Dispositif d'éclairage selon la revendication 4,
caractérisé en ce que
la pièce de boîtier (116) est montée sur une zone latérale de bordure de façon à pouvoir pivoter autour de l'axe (150) qui s'étend verticalement.

6. Dispositif d'éclairage selon la revendication 4,
caractérisé en ce que
l'on dispose sur la face avant (10 ; 110) une pièce de fermeture amovible (56 ; 156) au moyen de laquelle on peut recouvrir l'un au moins des éléments de fixation (54 ; 154) et que l'on peut enlever au moins en partie, de telle sorte que l'un au moins des éléments de fixation (54 ; 154) est accessible.
